# EUROPEAN PATENT SPECIFICATION

(11) **EP 3 683 283 B1**
(45) Date of publication and mention of the grant of the patent: **25.08.2021**
(21) Application number: 19397501.8
(22) Date of filing: 15.01.2019
(51) Int. Cl.: C09J 7/30, B65D 75/58, B65D 77/02, B65D 85/10

(54) **A LABEL LAMINATE WEB WITH OPEN-CLOSURE TYPE CLEAN PEEL REMOVABLE PRESSURE SENSITIVE ADHESIVE**
ETIKETTENLAMINATBAHN MIT WIEDER VERSCHLIESSBAREN SAUBER ABZIEHBAREN HAFTKLEBEMITTELN
BANDE STRATIFIÉE D'ÉTIQUETTES COMPORTANT UN ADHÉSIF DÉTACHABLE SENSIBLE À LA PRESSION À PELAGE PROPRE DE TYPE OUVERTURE-FERMETURE

(43) Date of publication of application: 22.07.2020
(73) Proprietor: UPM Raflatac Oy, 33310 Tampere (FI)
(72) Inventor: LOPEZ VERA, David, 08024 Barcelona (ES); URBANEK, Peter, 3433 Königstetten (AT); YLI-SIRNIÖ, Matti, 37120 Nokia (FI); JARSKE, Timo, 39360 Komi (FI)
(74) Representative: Berggren Oy

(56) References cited:
- EP-A1- 2 497 805
- EP-A1- 2 631 894
- WO-A1-2012/123633
- CN-A- 106 809 533

## Description

### Technical field

This specification relates to a label laminate web, a converted label web, an open-closure sealing label and a package sealed with the open-closure sealing label.

### Background

It is often of importance to store consumables, such as food, candy or cigarettes, in an open-closure type package which allows the consumables to stay fresh but which can also be easily opened and closed per need. If cigarettes, for example, go dry, they will lose their taste and may burn too quickly, which makes cigarettes very unpleasant to smoke. Exposure to air, for one, may cause candies to lose moisture and harden, and also cause them to lose their taste and other enjoyable properties. It is preferable to provide the consumable package of this kind with an open-closure sealing that helps to maintain the optimal conditions for the consumables despite of the fact that the package in use will be opened and closed for several times.

### Summary

It is an aim of this application to provide a label laminate web comprising open-closure type removable pressure sensitive adhesive and at least one high-accuracy adhesion-free area. Another aim is to provide a converted label web comprising labels, wherein the label comprises open-closure type removable pressure sensitive adhesive and at least one high-accuracy adhesion-free area. Further, aim is to provide an open-closure sealing label and a package comprising an open-closure sealing label.

According to an embodiment, a label laminate web is provided. The label laminate web comprises a face stock, a pressure sensitive adhesive layer and a release liner. The face stock is adjoined to the release liner via the pressure sensitive adhesive layer. The pressure sensitive adhesive layer comprises an open-closure type removable pressure sensitive adhesive. A predetermined level of anchorage is arranged between the face stock and the pressure sensitive adhesive layer for obtaining clean peel. The release liner comprises a release agent arranged to build a releasable contact with the pressure sensitive adhesive layer. The label laminate web comprises at least one label width, and the face stock of the at least one label width comprises an adhesive area and at least one adhesion-free area on longitudinal edge of the face stock in machine direction of the label laminate web. Accuracy of the width and/or position of the adhesion-free area in cross machine direction along longitudinal edge of the face stock is at least ± 1.0 mm.

According to another embodiment, converted label web is provided. The converted label web comprises a release liner with labels attached onto it. A label comprises a face adjoined to the release liner via a pressure sensitive adhesive layer. The pressure sensitive adhesive layer comprises an open-closure type removable pressure sensitive adhesive. A predetermined level of anchorage is arranged between the face and the pressure sensitive adhesive layer for obtaining clean peel. The release liner comprises a release agent arranged to build a releasable contact with the pressure sensitive adhesive layer. The converted label web comprises at least one label width. The face of the at least one label width comprises an adhesive area and at least one adhesion-free area on longitudinal edge of the face in machine direction of the converted label web. Accuracy of the width and/or position of the adhesion-free area in cross machine direction along longitudinal edge of the face is at least ± 1.0 mm.

According to still another embodiment, an open-closure sealing label is provided. The open-closure sealing label comprises a face and a pressure sensitive adhesive layer adjoined to the face. The pressure sensitive adhesive layer comprises an open-closure type removable pressure sensitive adhesive. A predetermined level of anchorage is arranged between the face and the pressure sensitive adhesive layer for obtaining a clean peel. The face comprises an adhesive area and at least one adhesion-free area along length of at least one edge of the open-closure sealing label. Accuracy of the width and/or position of the adhesion-free area along length of at least one edge of the open-closure sealing label is at least ± 1.0 mm.

One embodiment provides a package comprising an open-closure sealing label.

Further embodiments are presented in the dependent claims.

### Brief description of the drawings

- Fig. 1: illustrates, by way of an example, a side view in the Sₓ,S_{z}-plane of a label laminate web 100 according to an embodiment,
- Fig. 2a: illustrates, by way of an example, a side view in the Sₓ,S_{z}-plane of a converted label web 210a according to an embodiment,
- Fig. 2b: illustrates, by way of an example, a side view in the Sₓ,S_{z}-plane of a converted label web 210b according to an embodiment,
- Fig. 3a: illustrates, by way of an example, a side view in the Sₓ,S_{z}-plane of an open-closure sealing label 320a according to an embodiment,
- Fig. 3b: illustrates, by way of an example, a side view in the Sₓ,S_{z}-plane of an open-closure sealing label 320b according to an embodiment,
- Fig. 4a: illustrates, by way of an example, an underside view in the Sₓ,S_{y}-plane of an open-closure sealing label 420a according to an embodiment,
- Fig. 4b: illustrates, by way of an example, an underside view in the Sₓ,S_{y}-plane of an open-closure sealing label 420b according to an embodiment,
- Fig. 5a: illustrates, by way of an example, a perspective view of a package 530a comprising an open-closure sealing label according to an embodiment, and
- Fig. 5b: illustrates, by way of an example, a perspective view of a package 530b comprising an open-closure sealing label according to an embodiment.

The figures are schematic. The figures are not in any particular scale.

### Detailed description

The solution is described in the following in more detail with reference to some embodiments, which shall not be regarded as limiting.

In this description and claims, the percentage values relating to an amount of a material are percentages by weight (wt.%) unless otherwise indicated. Term "comprising" may be used as an open term, but it also comprises the closed term "consisting of". Unit of thickness expressed as microns corresponds to µm. Unit of temperature expressed as degrees C corresponds to °C. The following reference numbers and denotations are used in this application:
- Sₓ, S_{y}, S_{z}: 3D coordinates
- MD: machine direction
- CD: cross (machine) direction
- PSA: pressure sensitive adhesive

- 100: label laminate web
- 101: face stock
- 102: pressure sensitive adhesive layer
- 103: release liner
- 201: face
- 202: pressure sensitive adhesive layer
- 203: release liner
- 204: permanent adhesive
- 210a, 210b: converted label web
- 301: face
- 302: pressure sensitive adhesive layer
- 304: permanent adhesive
- 320a, 320b: open-closure sealing label
- 402: pressure sensitive adhesive layer
- 405: adhesion-free area
- 406: width of the adhesion-free area
- 420a, 420b: open-closure sealing label
- 520a, 520b: open-closure sealing label
- 530a,530b: package

A label is a piece of material to be applied onto articles of different shapes and materials. An article to be labelled may be a package. A label comprises at least a face material also referred to as a face stock or a face. A typical way to adhere the label onto an article is by use of adhesive. The label comprising an adhesive layer is referred to as an adhesive label. The adhesive may comprise pressure sensitive adhesive. A label comprising pressure sensitive adhesive may be referred to as a pressure sensitive adhesive (PSA) label. Pressure sensitive adhesive labels may also be referred to as self-adhesive labels.

Labels may be used in wide variety of labelling applications and end-use areas, such as labelling of food, home and personal care products, industrial products, pharmaceutical and health care products, beverage and wine bottles, other consumables etc. The surface of the labelled article may be for example plastics, glass, metal, or paper based. The labelled article may be for example a container, such as a bottle, jar, canister, can, tin or the like. The label may also be applied to semi-rigid or flexible packages used for e.g. packaging of food.

Term "face" refers to a top substrate of the label, also called as a face stock, a face material or in case of plastic material a face film. The face may have a monolayer or multilayer structure comprising at least two layers. In case of a plastic material the multilayer filmic structure may be co-extruded or it may comprise several layers laminated together. The face is the layer that is adhered to the surface of an article during labelling through an adhesive layer. A combination comprising a face and adhesive may be referred to as an adhesive label. The face may comprise e.g. printing in order to provide information and or visual effect. Further, the label may contain additional layers, for example top coatings or overlaminates to protect the top surface and/or print of the label against rubbing or other external stress.

Term "release liner" refers to a structure comprising a substrate and a release layer on a surface of the substrate contacting the adhesive in a label laminate. The substrate may also be called a backing material. The release liner may comprise a release agent. The release agent is a chemical having low surface tension. The release agent may be used in order to prevent other materials from bonding to it and to provide a release effect. Release liners of the label laminates may serve one or more useful functions: they may be used as a carrier sheet onto which the adhesive is coated; they may protect the adhesive layer during storage and transportation; they may provide a support for labels during die-cutting and printing, and ultimately they may provide the release substrate carrying the labels for dispensing onto the items to be labelled.

Term "label laminate", also referred to as an adhesive label laminate refers to a product comprising a face, adhesive and a release liner. In the label laminate the face is laminated together with the release liner having the adhesive in between. The label laminate may be a continuous structure from which the individual labels may be die-cut. The release liner of the label laminate is typically removed prior to labelling i.e. attaching the label onto the surface of an item to be labelled.

Individual labels may be cut from the label laminate structure. After cutting, the labels may remain to be attached to a common release liner (the release liner remains uncut). Thus, a plurality of labels may remain to be attached to a common continuous release liner. This may be called a converted label web. Alternatively, the labels may be completely separate (i.e. also the release liner may be cut). A label, including a face and adhesive, may be separated from the release liner e.g. by pulling the release liner in the direction -Sz with respect to the label. Thus, a surface of the adhesive layer is exposed so that said surface can be attached to an article.

Term "web" refers to a continuous sheet of material. The web is generally processed by moving over rollers. Between processing stages, webs may be stored and transported as rolls.

Term "machine direction" refers to manufacturing direction of a web. Machine direction may also refer to a circumferential direction of a roll. Term "cross machine direction" or "cross direction" refers to a direction that is transversal to the machine direction.

Term "laminate web" refers to a structure comprising two or more continuous sheets of material attached together into a web format. Typically, the laminate web comprises a face material attached (laminated) onto a release liner via a pressure sensitive adhesive.

### Label laminate web

Typically a label laminate web is manufactured as a continuous web with the original width of the label laminate web corresponding to the width of the manufacturing/laminating machine. This manufacturing width may be, for example, 1-3 meters and corresponds therefore to the width of the so-called machine rolls that are created in the end of the lamination process. Then, the machine rolls are split, i.e. cut lengthwise to so-called customer rolls with smaller widths ranging from a few centimeters typically to some tens of centimeters depending on the end use. The splitting involves typically unwinding the machine roll, then splitting the web and again winding the narrower webs into individual customer rolls. Alternatively, the splitting into customer rolls may be performed as a part of the label lamination process as an in-line process, or it may be even performed as a part of the label laminate converting process, where the label laminate is die-cut (kiss cut) to form individual labels carried by continuous release liner. Printing and other converting steps may be performed on suitable process phases, as known in the art.

The current disclosure involves a step, where a label laminate web 100 is arranged to comprise an adhesive area and at least one adhesion-free area on longitudinal edge of the face stock in machine direction, i.e. in the manufacturing direction of the web. The adhesion-free area is a continuous area arranged along the longitudinal edge of the face stock in machine direction of the label laminate web. This adhesion-free area is important for the open-closure end uses of the label laminate web 100 according to the disclosure. Further, the end uses place strict demands on the positional accuracy of this adhesion-free area, which demands arise partly from the following converting steps of the label laminate web 100 where, for example, the die-cutting needs to be accurately positioned and aligned with respect to this adhesion-free area.

In one embodiment, wherein the label is used as an open-closure sealing label for a tobacco package, the adhesion-free area is preferably created leaving adhesive out from the adhesion-free area. Alternatively and in some other end uses, the adhesion-free area may be created by locally treating the adhesive layer to lose its tack, for example, by varnishing the adhesive layer locally or by using some other appropriate chemical treatment.

The use of the label laminate web 100 for providing labels to be used as tobacco package open-closure sealing label and the converting steps required for that place very stringent requirements for the accuracy of the width and/or position of the adhesion-free area in cross machine direction along longitudinal edge of the label laminate web 100. When the adhesion-free areas are created via so-called pattern gumming during the manufacturing of the full width laminate (typically 1-3 meters), the accuracy of width and/or position of the adhesion-free areas in cross machine direction needs to be at least ± 1.0 mm. Compared to the full width of the machine web this is a very high accuracy requirement.

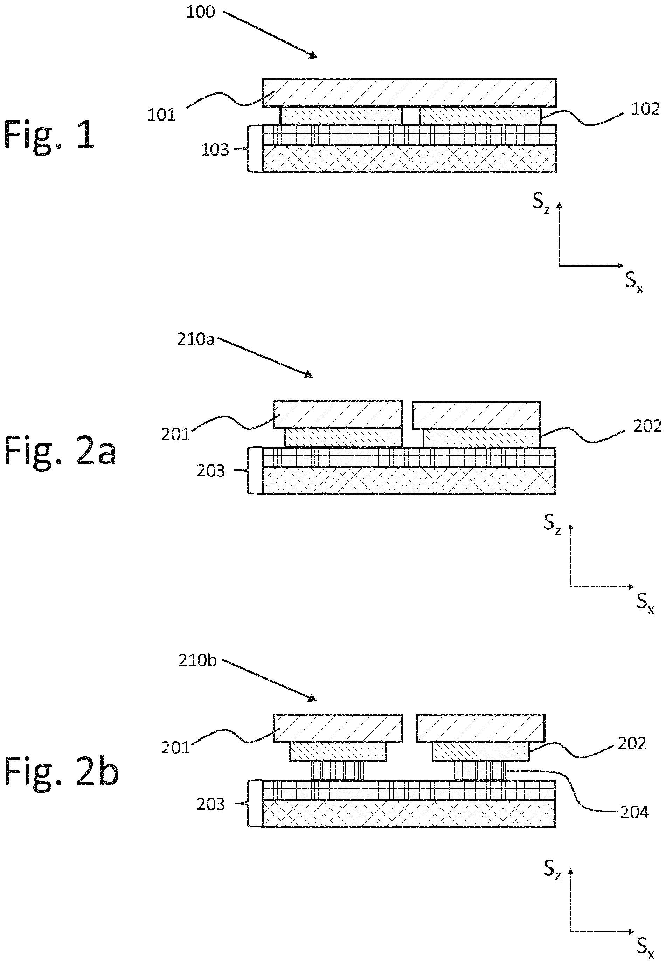

According to an embodiment and as illustrated in Fig. 1, a label laminate web 100 with high accuracy adhesion-free areas in longitudinal, machine direction of the web is provided. The label laminate web 100 comprises a face stock 101, a pressure sensitive adhesive layer 102 and a release liner 103. The face stock 101 is adjoined to the release liner 103 via the pressure sensitive adhesive layer 102. Thus, the release liner 103 is arranged on opposite side of the pressure sensitive adhesive layer 102 with respect to the face stock 101. The label laminate web 100 is a continuous structure from which individual labels may be die-cut.

The label laminate web 100 comprises at least one label width. The label laminate web may have been cut from a wider label laminate web having a manufacturing width. The face stock 101 of the at least one label width comprises an adhesive area and at least one adhesion-free area on longitudinal edge of the face stock 101 in machine direction of the label laminate web 100. The at least one adhesion-free area is arranged along length of at least one edge of the face stock 101 of the at least one label width. Accuracy of the width and/or the position of the adhesion-free area in cross machine direction along longitudinal edge of the face stock 101 is at least ± 1.0 mm. The width of the adhesion-free area in cross machine direction arranged on the longitudinal edge of the face stock 101 in machine direction may be from 5 to 15 mm, or if needed, chosen otherwise to suit the end use in question.

According to an embodiment, the adhesion-free area is obtained by pattern gumming. Pattern gumming is a manufacturing technique, wherein before lamination of the label laminate web the adhesive is only locally coated onto the release liner, or alternatively the adhesive is before lamination locally removed from certain areas of the release liner before drying/curing to become a pressure sensitive adhesive and lamination with the face material thereafter.

Typically, the adhesive is coated onto the release liner 103 in fluidic phase and afterwards "solidified" into pressure sensitive adhesive layer 102. This "solidification" may be performed by heat treating the adhesive layer to remove water in case of water based adhesives, or by removing solvents in case of solvent based adhesives. Further, the solidification may include chemical cross-linking reactions to cure the adhesive layer into pressure sensitive adhesive. Within context of this disclosure, solidification is in general referred to as drying/curing if not otherwise specified.

Within context of this disclosure, a width and/or positional accuracy of the adhesion-free area in cross machine direction is ± 1.0 mm. This means that the width and/or position of the adhesion-free area along longitudinal edge of the face stock 101 when measured from distinct locations does not deviate more than ± 0.5 mm. Thus, an accuracy of the pattern gumming in cross machine direction is at least ± 1.0 mm.

In order to achieve such high pattern gumming accuracy, the following requirements are to be met.

Firstly, the sideways (cross machine direction) movement of the substrate to be coated with adhesive, i.e. the release liner 103 web, needs to be kept minimal. This sideways movement needs to be arranged to be no larger, but preferably smaller than the final width and positional accuracy of the adhesion-free area in the cross machine direction. Preferably the web sideways movement when running is at mostly ± 0.5 mm or smaller. This is a challenging requirement as the machine speeds in the lamination process are typically in the order of hundreds of meters per minute and the process typically includes unwinding the previously formed rolls of both the release liner substrate material as well as the face material before laminating them together. These rolls have machine width (1-3 meters) and may also have some telescoping in them affecting the final accuracy. Preferably, the release liner web is guided in order to maintain the web at a constant position during the coating of the pressure sensitive adhesive. Guiding of the web can be arranged by mechanical side guides limiting the movement of the web in sideways direction.

Secondly, the release liner needs to be locally accurately coated with the fluidic adhesive in a manner that prior to the drying/curing the adhesive into stable pressure sensitive adhesive layer the viscous adhesive does not creep or move on the release liner. The adhesive is not allowed to flow onto the adhesion-free area. This requires arranging the properties of the fluidic coating to have proper viscosity and other fluidic properties in such a way that it can be accurately coated onto the release liner with the final accuracy in cross machine direction at least ± 1.0 mm including the effects coming from the web sideways movements. The adhesive coating process is preferably temperature-controlled in order to achieve the desired viscosity of the pressure sensitive adhesive, and thus the required accuracy of the width and/or the position of the adhesion-free area.

Thirdly, the adhesive coating thickness in cross machine direction of the web needs to be even in order to get an even final thickness for the label laminate web 100. The coating thickness measured across the cross machine direction of the web is called a coating thickness profile. In this profile, the nominal coating thickness should be selected to be in the range of 15-25 micrometers with the thickness variation from the nominal value being ± 15 % or smaller. As a rule of thumb, the adhesive coating thickness is related to the coat weight of the adhesive in such a way, that generally coat weight of 1 g/m² corresponds to coating thickness of ~ 1 µm or slightly less.

According to one embodiment, the adhesive is coated using a modified slot die coating method, wherein the slot die nozzle has been modified to comprise external adhesive flow blocking units to provide pattern gumming capability. The blocking units have been custom designed to correspond to the predetermined adhesion-free area widths and shaped to provide an adhesive flow that ensures even adhesive coating profile at adhesive coated areas. The modified slot die including the blocking units is designed by taking into account the speed of the web and the fluidic properties of the adhesive to be coated.

Within context of this disclosure, the pressure sensitive adhesive is removable adhesive, i.e. it can be peeled manually after having been attached onto the surface to be labelled. For removable adhesive, it is characteristic that the peeling force does not grow to unacceptable levels even after longer period of having been adhered to a labelled surface. Further, it is characteristic to a removable adhesive that it can be clean peeled, i.e. leaving minor or negligible residues on the surface having been labelled onto.

A specific subcategory of removable adhesives is open-closure adhesives which have been designed for repeatable peeling and closing actions from and onto the labelled surface. For an open-closure adhesive, the peeling and tackiness properties remain substantially unchanged over several open-closure actions. To further have clean peeling, the open-closure adhesive needs to have proper anchorage to the face material as well as suitable release values from the surface onto which it has been labelled. This ensures that adhesive remains attached to the face material and at the same time can be easily enough opened from the labelled surface without leaving residues of the adhesive on that surface.

To fulfil all of the aforementioned properties, according to one embodiment the pressure sensitive adhesive is UV-curable acrylic adhesive. UV-curing ensures fast and complete curing process enhancing both the pattern gumming accuracy as well as the clean peel behaviour via good anchorage to the label face material.

In order to ensure a repeatable clean peel behaviour, the face stock 101 is arranged to properly anchor the pressure sensitive adhesive layer 102 to the adhesive area of the face stock 101 and to have certain peel adhesion properties. When the anchorage of the adhesive to the face material is correctly balanced with the peel properties of the adhesive from the labelled surfaces, then the adhesive layer remains securely attached to the face material even during repeatable open-closure actions.

The pressure sensitive adhesive layer 102 may have a peel adhesion value from 1.0 to 7.0, preferably from 1.0 to 3.0 or from 2.0 to 4.0 or from 4.0 to 7.0 N/25 mm when measured according to standard FTM 2 90°. Peel adhesion is defined as the force required to remove pressure sensitive coated material, which has been applied to a standard test plate under specified conditions, from the plate at a specified angle and speed. Adhesion is measured 20 minutes and 24 hours after application, the latter being considered as the ultimate adhesion.

The adhesive anchorage refers to bonding of the pressure sensitive adhesive layer 102 to the face stock 101. When the adhesive anchorage is desired, the pressure sensitive adhesive layer 102 remains with the face stock 101. The adhesive anchorage may be measured by a modified FINAT ink adhesion standard (FTM 21/22). The measurement is performed at a temperature of 15 °C in a climatic chamber having a relative humidity of 70%. The measurement is performed four days after coating the adhesive. The adhesive anchorage is desired, whereupon after contact and release of the adhesive label with a counterpart material, the adhesive remains with the face stock and no spots of the adhesive transfer from the adhesive to the counterpart material. As counterpart materials, different types of tapes (TESA 4663, Scotch tape 810, TESA 4124) are used.

A proper balance between the peel adhesion values and the adhesive anchorage provides a label material that provides correct open-closure behaviour as well as clean peeling properties.

In order to obtain desired high level of adhesive anchorage, the face stock 101 may comprise a primer coating. The primer coating may be arranged to anchor the pressure sensitive adhesive layer 102 to the adhesive area of the face stock 101. The choice of the primer coating is dependent on the nature of the pressure sensitive adhesive. The primer coating may be for example acrylic based or polyurethane based.

A coat weight of the pressure sensitive adhesive layer 102 may be from 15 to 25 g/m². The pressure sensitive adhesive layer 102 is preferably fully cured. With fully cured adhesive the chemistry and performance of the adhesive layer over time are assured. Fully cured adhesive provides constant adhesive anchorage and T-peel force over time. Fully cured adhesive may be characterized by having a dynamic shear of at least 25 N/12,7 mm measured according to standard FTM 18 and a tack of at least 6 N/25 mm on a glass surface measured according to standard FTM 9.

The release liner 103 comprises a release agent. The release agent is arranged to build a releasable contact with the pressure sensitive adhesive layer 102. The release agent comprises silicone. The release liner 103 may comprise paper or polyester as a backing material. Proper smoothness of the surface of the release liner 103 is required in order to build a releasable contact with the pressure sensitive adhesive layer 102.

In a specific end use of using as an automatic sealing label for tobacco packages, the label laminate web 100 after being laminated and optionally after being split into customer width rolls, will undergo a special conversion step wherein the label laminate web 100 is delaminated and again re-laminated before its final use. In this case, the label laminate web 100 is arranged to be delaminated and re-laminated during a conversion, and the release agent is arranged to rebuild a contact with the pressure sensitive adhesive layer 102 after re-laminating of the label laminate web 100. When the label laminate web 100 is opened, i.e. delaminated, an area of the pressure sensitive adhesive layer 102 is arranged to receive additional permanent adhesive layer. After receiving the permanent adhesive layer onto the pressure sensitive adhesive layer 102 the label laminate web 100 is re-laminated.

The purpose of the aforementioned conversion is to prepare the label laminate web 100 for its end use as an automatic open-closure sealing label, wherein the permanent adhesive arranged onto the pressure sensitive adhesive layer 102 is configured to be permanently attached to a separated part of an inner sleeve of a package to be sealed with the open-closure sealing label. When used as a tobacco package automatic open-closure sealing label, this area of the label comprising a separated part of the inner sleeve of the tobacco package permanently attached to the sealing label is arranged to overlap the opening of the inner sleeve of the tobacco package holding the cigarettes. The separated part of the inner sleeve is essential to securely cover the pressure sensitive adhesive of the sealing label and to prevent the adhesive from adhering and contaminating the tobacco products.

### Converted label web

The label laminate web 100 according to this disclosure is configured to be converted before dispensing the individual labels. The conversion refers to processes such as printing, coating, die-cutting and slitting. During conversion the label laminate web 100 is converted to an intermediate product, namely a converted label web 210a, 210b. The converted label web 210a, 210b refers to a product wherein individual labels remain to be attached onto a release liner 203, which is used as a carrier in later phases to help to carry and dispense the individual labels to their final use.

The label laminate web 100 as presented above is die-cut in order to obtain individual labels attached on a continuous release liner. In die-cutting the labels are cut into a desired shape. Die-cutting is arranged to cut the face stock and the pressure sensitive adhesive layer adjoined to it. Waste material that does not belong to the labels is removed.

For die-cutting, it is of importance to have proper thickness and viscoelastic properties for the pressure sensitive adhesive layer, such that no bleeding of the adhesive happens during the die-cutting or afterwards. Bleeding of the adhesive may cause unwanted adhesive residues either or both on the edges of the label and on the die-cutting tool. Adhesive residues on the edges of the label may cause labels to stick unwantedly, which might cause for example expensive downtimes in dispensing processes and also affect the end use properties.

Thus, a converted label web 210a, 210b comprising a release liner 203 with labels attached onto it is provided, as illustrated in Figs. 2a and 2b. A label comprises a face 201 adjoined to the release liner 203 via a pressure sensitive adhesive layer 202. The pressure sensitive adhesive layer 202 comprises an open-closure type removable pressure sensitive adhesive. A predetermined level of anchorage is arranged between the face 201 and the pressure sensitive adhesive layer 202 in order to obtain clean peel during the end use of the label. The release liner 203 comprises a release agent arranged to build a releasable contact with the pressure sensitive adhesive layer 202.

The converted label web 210a, 210b comprises at least one label width. The face 201 of the at least one label width comprises an adhesive area and at least one adhesion-free area on longitudinal edge of the face 201 in machine direction of the converted label web 210a, 210b. Accuracy of the width and/or position of the adhesion-free area in cross machine direction along longitudinal edge of the face 201 is at least ± 1.0 mm.

According to an embodiment, the label laminate web is delaminated and re-laminated during the conversion as described above. In delamination, the release liner of the label laminate web is opened and permanent adhesive is applied onto the adhesive area of the face. In re-lamination the label laminate web is closed by adjoining the release liner and the label. Thus, in addition to the above presented features, the converted label web 210b comprises permanent adhesive 204 arranged in between the pressure sensitive adhesive layer 202 and the release liner 203a as illustrated in Fig. 2b. Pressure sensitive adhesive has to be compatible with the permanent adhesive. Permanent adhesive 204 may be for example hot melt adhesive. During the end use of the label in a tobacco package, the permanent adhesive will create a permanent bond with a predetermined area of inner sleeve of the tobacco package holding the cigarettes.

As the label laminate web 100 is delaminated and re-laminated, constant release value is of importance for the conversion process, as it allows the printer to keep tension control and helps to avoid web misplacement. The release agent is arranged to rebuild a contact with the pressure sensitive adhesive layer after re-laminating of the label laminate. The pressure sensitive adhesive layer arranged on the adhesive-receiving area is configured to receive permanent adhesive after delaminating and before re-laminating of the label laminate.

### Open-closure sealing label

For reasons mentioned earlier in this application, certain consumables benefit from being packaged in a manner wherein an open-closure sealing label is hermetically or semi-hermetically capable of sealing the packages and protecting the products from the environment or from losing their moisture or other properties. One such important embodiment is packaging cigarettes.

An open-closure sealing label may be used for sealing an inner sleeve of a cigarette box. Cigarette box refers to a container or a package for storing cigarettes. Cigarettes may refer to conventional tobacco products and to so-called smoke-free products. The materials of the inner sleeve of the cigarette box may comprise for example an uncoated film or acrylic coated film.

An outmost envelope of the cigarette box comprises a lid that is opened when extracting a cigarette from the box and closed afterwards. Inside the outmost envelope the cigarette box typically comprises an inner sleeve, into which the cigarettes are being placed. The inner sleeve comprises material that enables to maintain the cigarettes moist, not allowing them to dry. The inner sleeve may comprise for example acrylic or cellulosic materials, or polylactic acid film. It is of importance to seal the inner sleeve efficiently in between extracting the cigarettes and opening and closing of the lid.

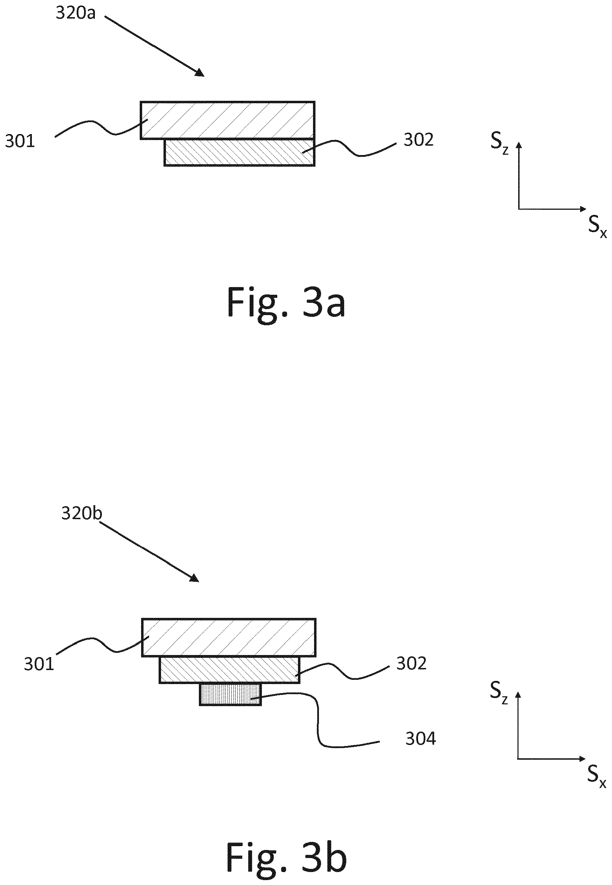

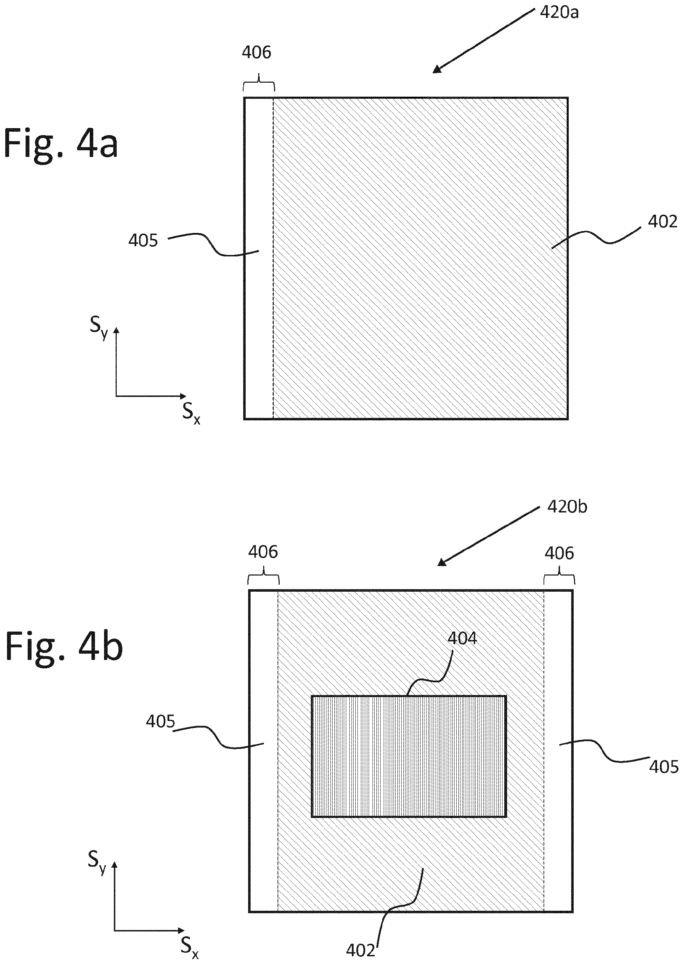

According to an embodiment and as illustrated in Figs. 3a and 4a, an open-closure sealing label 320a, 420a is provided. The open-closure sealing label 320a, 420a can be repeatably opened and closed with clean peel and recurring performance. The open-closure sealing label comprises a face 301 and a pressure sensitive adhesive layer 302, 402 adjoined to the face 301. The pressure sensitive adhesive layer 302, 402 comprises an open-closure type removable pressure sensitive adhesive. A predetermined level of anchorage is arranged between the face 301 and the pressure sensitive adhesive layer 302, 402 in order to obtain a clean peel during the end use. Fig. 4a illustrates an underside view of the open-closure sealing label 320a, 420a. The face 301 comprises an adhesive area and at least one adhesion-free area 405 along length of at least one edge of the open-closure sealing label 320a, 420a. Accuracy of the width 406 and/or position of the adhesion-free area along length of at least one edge of the open-closure sealing label is at least ±1.0 mm. The width 406 of the adhesion-free area 405 in cross machine direction may be for example from 5 to 15 mm.

The face 301 of the open-closure sealing label 320a, 420a of Figs. 3a and 4a may comprise polyethylene or polypropylene. The face 301 may have a density of from 25 to 85 g/m² when measured according to standard ISO 536. The face 301 may have a thickness of from 30 to 90 µm when measured according to standard ISO 534. The pressure sensitive adhesive layer 302, 402 of the open-closure sealing label 320a, 420a of Figs. 3a and 4a may have a peel adhesion value of from 4.0 to 7.0 N/25mm when measured according to standard FTM 2 90°.

According to another embodiment illustrated in Figs. 3b and 4b, an open-closure sealing label 320b, 420b is provided that in addition to the above presented features comprises permanent adhesive 304, 404 arranged onto the pressure sensitive adhesive layer 302, 402. The face 301 of the open-closure sealing label 320b, 420b may comprise two adhesion-free areas along lengths of opposite edges of the open-closure sealing label 320b, 420b, as illustrated in Figs. 3b and 4b.

The face 301 of the open-closure sealing label 320b, 420b of Figs. 3b and 4b may comprise polyester. The face 301 may have a density of from 50 to 75 g/m² when measured according to standard DIN 53352. The face 301 may have a thickness of from 35 to 55 µm when measured according to standard DIN 53370. The pressure sensitive adhesive layer 302, 402 of the open-closure sealing label 320b, 420b of Figs. 3b and 4b may have a peel adhesion value of from 1.0 to 4.0, preferably from 1.0 to 3.0 or from 2.0 to 4.0 N/25mm when measured according to standard FTM 2 90°.

The open-closure sealing label 320a, 320b, 420a, 420b may be used for sealing a package. The adhesion-free area(s) 405 of the face 301 provide areas via which the open-closure sealing label 320a, 320b, 420a, 420b is permanently attachable to a package to be sealed with the label. The adhesion-free area(s) 405 is (are) capable of receiving permanent adhesive. Spots of permanent adhesive may be applied onto the adhesion-free area(s) 405 of the face 301, and the label may be attached to the package to be sealed with the label. The accuracy of the width and/or position of the adhesion-free area(s) is important for use of the label as an open-closure sealing label. The permanent adhesive is applied in order to permanently adhere the open-closure sealing label to the package to be sealed. The permanent adhesive may be for example hotmelt adhesive or cold glue. If the adhesion-free area(s) 405 is (are) misaligned, the permanent adhesion of the open-closure sealing label to the package can fail. The accuracy of the width and/or position of the adhesion-free area(s) is also important for the co-alignment of the open-closure sealing label with the package to be sealed.

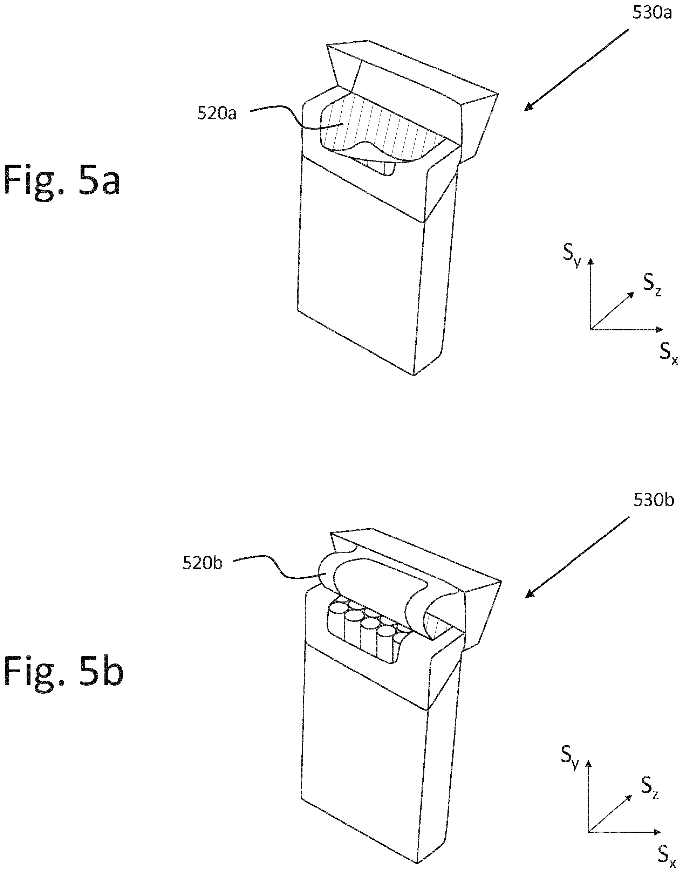

The open-closure sealing label 320a, 420a, 520a may be used as a manual seal, that is a seal opened and closed by the user by a hand, as illustrated in Fig. 5a. For manual seal, an open-closure sealing label 320a, 420a, 520a having one adhesion-free area 405 capable of receiving permanent adhesive (as illustrated in Figs. 3a and 4a) is used. The open-closure sealing label 320a, 420a, 520a comprising one adhesion-free area 405 along length of one edge of the sealing label is permanently attached to the package from this one edge of the label via the permanent adhesive. The opposing edge of the sealing label may be used as a grip surface, i.e. a finger tab for manually opening and closing the sealing label by the user. The finger tab on the sealing label preferably comprises an adhesion-free area. The finger tab may be arranged in different shapes/sizes and/or positions on the label edge to be conveniently gripped by the user. The adhesion-free area of the grip surface may be implemented by killing or varnishing the pressure sensitive adhesive on the area.

The pressure sensitive adhesive layer 302, 402 of the manual open-closure sealing label 320a, 420a is configured to adhere to a separated part of an inner sleeve of a package to be sealed with the open-closure sealing label. When used as a tobacco package manual open-closure sealing label, this area of the label adhered to a separated part of the inner sleeve of the tobacco package is arranged to overlap the opening of the inner sleeve of the tobacco package holding the cigarettes. The separated part of the inner sleeve is essential to securely cover the pressure sensitive adhesive of the sealing label and to prevent the adhesive from adhering and contaminating the tobacco products. Alternatively, the open-closure sealing label 320b, 420b, 520b may be used as an automatic sealing label, in which case the opening and closure of the sealing label is integrated to the opening and closure of a lid of the package, as illustrated in Fig. 5b. For automatic sealing, an open-closure sealing label 320b, 420b, 520b having two adhesion-free areas 405 along lengths of opposite edges capable of receiving permanent adhesive may be used (Figs. 3b and 4b). The open-closure sealing label 320b, 420b, 520b for automatic sealing is permanently attached to the package via permanent adhesive applied on both two adhesion-free areas 405. One adhesion-free area 405 provided with the permanent adhesive may be attached to an inner sleeve of a package. The other adhesion-free area 405 provided with the permanent adhesive may be attached to the lid of the package. By this way, the open-closure sealing label 320b, 420b, 520b is arranged to seal the package when closing the lid and to open the seal when opening the lid.

The permanent adhesive 304, 404 arranged onto the pressure sensitive adhesive layer 302, 402 is configured to be permanently attached to a separated part of an inner sleeve of a package to be sealed with the open-closure sealing label. When used as a tobacco package automatic open-closure sealing label, this area of the label comprising a separated part of the inner sleeve of the tobacco package permanently attached to the sealing label is arranged to overlap the opening of the inner sleeve of the tobacco package holding the cigarettes. The separated part of the inner sleeve is essential to securely cover the pressure sensitive adhesive of the sealing label and to prevent the adhesive from adhering and contaminating the tobacco products.

For use as the automatic sealing label of Fig. 5b, the open-closure sealing label 320b,420b, 520b has to have right stiffness in order to be capable of maintaining a curvature shape when opening the seal, i.e. opening the lid of the package. Polyester as the face material serves this purpose well. Moreover, the permanent adhesive 304, 404 arranged onto the pressure sensitive adhesive layer 302, 402 provides further stiffness to the open-closure sealing label 320b, 420b, 520b.

Peel adhesion value of the pressure sensitive adhesive layer 302, 402, defining the force required to remove the label from a surface is dependent on the type of adhesive used. As a rule of thumb, manual open-closure sealing label has typically somewhat higher peel adhesion value than the automatic open-closure sealing label. This derives from the fact that more local force becomes applied to the label when opening the open-closure sealing label manually using the finger tab. The proper value for peel adhesion depends also on the face material of the sealing label because the stiffness of the face material effects on how the opening force applied onto the automatic lid and/or manual finger tab becomes transferred to the open-closure interface between the pressure sensitive adhesive layer 302, 402 and the inner sleeve of the tobacco package. In automatic lid packages, the sealing label tends to each time open in similar manner for the full width of the sealing label. On the other hand, in manual sealing labels, the opening is affected by the direction of the pull from the finger tab typically leading to more asymmetric opening of the sealing label.

Broad ranges for peel 180° values suitable for a variety of different label face materials can be given as follows:
- automatic labels peel 180 spec: 0.3 - 8.5 N/25mm
- manual labels peel 180 spec: 2.5 - 9.5 N/25mm
The significant overlap of these ranges comes from the possibility to use several different face materials. For a single face material, it would be more evident that automatic labels have preferably lower peel values compared to manual labels.

The open-closure sealing label is releasably connectable via the pressure sensitive adhesive layer to a counterpart material. Being releasably connectable means that the adhesive label may be attached to the counterpart material via the pressure sensitive adhesive and released from the counterpart material for several times without affecting the adherent properties of the label. Several times refers to at least 20 times or equal to the number of cigarettes in a cigarette package. The counterpart material may comprise for example uncoated film or acrylic coated film. The counterpart material may comprise for example acrylic or cellulosic materials, or polylactic acid film.

The right adhesive anchorage, namely the bonding of the pressure sensitive adhesive layer to the face is important for use of the open-closure sealing label for sealing a package. When the adhesive anchorage is desired, the pressure sensitive adhesive layer remains with the open-closure sealing label. The adhesive anchorage is desired, whereupon after contact and release of the open-closure sealing label with a counterpart material, the pressure sensitive adhesive layer remains with the label and no spots of the adhesive transfer from the label to the counterpart material.

Alignment and positional accuracies guaranteed by the processes and provided into the products is critical from this disclosure's point of view. The accurate spatial location of the adhesive area and the adhesion-free area(s) is needed for accurate die-cutting as well as for the conversion process wherein, according to some embodiments, the permanent adhesive is added onto the pressure sensitive adhesive layer after delaminating and before re-laminating the label laminate web. The permanent adhesive has to be accurately located in order to correctly receive the separated part of the inner sleeve of the tobacco package. The permanent adhesive is not allowed to extend over outer periphery of the separated part of the inner sleeve of the tobacco package adjoined to the permanent adhesive, as this would make the sealing label permanently adhesive and thus render it completely useless. Finally, and as already stated above, the positional accuracy of the adhesion-free area(s) is important in order to enable the permanent adhesive to be accurately applied for attachment of the sealing label into the tobacco package.

### Materials of the face stock

Materials, also referred to as components, of the face stock comprise polyester, polyethylene, polypropylene, renewable materials. The face stock may be top-coated.

In an example, the face stock is a clear, glossy, top-coated polyester film having a substance of 70 g/m² when measured according to standard DIN 53352 and a caliper of 50 µm when measured according to standard DIN 53370.

In an example, the face stock is a glossy, top-coated, direct metallized polyethylene film having a substance of 81 g/m² when measured according to standard ISO 536, a caliper of 86 µm when measured according to standard ISO 534, tensile strength in MD of 22 N/mm² when measured according to standard EN ISO 527 and tensile strength in CD of 15 N/mm² when measured according to standard EN ISO 527.

In an example, the face stock is a top-coated, direct metallized polyester film having a substance of 72 g/m² when measured according to standard DIN 53352 and a caliper of 52 µm when measured according to standard DIN 53370.

In an example, the face stock is an ultraclear, glossy, top-coated polyester film having a substance of 50 g/m² when measured according to standard DIN 53352, a caliper of 36 µm when measured according to standard DIN 53370, a tensile strength in MD of 190.0 N/mm² when measured according to standard DIN 53455 and a tensile strength in CD of 270.0 N/mm² when measured according to standard DIN 53455.

In an example, the face stock is a clear, glossy, biaxially oriented, top-coated polypropylene film having a substance of 28 g/m² when measured according to standard ISO 536 and a caliper of 31 µm when measured according to standard ISO 534.

In an example, the face stock is a glossy, biaxially oriented, top-coated, metallized polypropylene film having a substance of 47 g/m² when measured according to standard ISO 536 and a caliper of 51 µm when measured according to standard ISO 534.

In an example, the face stock is a glossy, biaxially oriented, top-coated, metallized polypropylene film having a substance of 28 g/m² when measured according to standard ISO 536 and a caliper of 32 µm when measured according to standard ISO 534.

In an example, the face stock is a gloss-clear, top-coated biodegradable film made from an annually renewable resource having a substance of 65 g/m² when measured according to standard DIN 53352, a caliper of 45 µm when measured according to standard DIN 53370, elongation in MD of 20 % when measured according to standard ASTM D882, elongation in CD of 55 % when measured according to standard ASTM D882, tensile strength in MD of 162 MN/m² when measured according to standard ASTM D882, tensile strength in CD of 95 MN/m² when measured according to standard ASTM D882 and gloss of 105 % when measured according to standard ASTM D2457. The face stock is resistant to oil and grease, has high stiffness for good conversion, is completely biodegradable into CO₂ and water, and passes the European composting certification standard DIN EN 13432.

In an example, the face stock is a metallized, top-coated biodegradable film made from annually renewable resource having a substance of 65 g/m² when measured according to standard DIN 53352, a caliper of 45 µm when measured according to standard DIN 53370, elongation in MD of 20 % when measured according to standard ASTM D882, elongation in CD of 55 % when measured according to standard ASTM D882, tensile strength in MD of 162 MN/m² when measured according to standard ASTM D882, tensile strength in CD of 95 MN/m² when measured according to standard ASTM D882 and gloss of 105 % when measured according to standard ASTM D2457. The face stock is resistant to oil and grease, has high stiffness for good conversion, is completely biodegradable into CO₂ and water, and passes the European composting certification standard DIN EN 13432.

### Pressure sensitive adhesive

In an example, the pressure sensitive adhesive is a radiation-cured UV-acrylic adhesive having a tack min of 2 N when measured according to standard FTM 9, a tack max of 6 N when measured according to standard FTM 9, a peel min of 1.0 N/25mm when measured according to standard FTM 2 90°, a peel max of 3.0 N/25mm when measured according to standard FTM 2 90°, temperature min of 10 °C and temperature max of 140 °C.

In an example, the pressure sensitive adhesive is a radiation-cured UV-acrylic adhesive having a peel min of 4.0 N/25mm when measured according to standard FTM 2 90° and a peel max of 7.0 N/25mm when measured according to standard FTM 2 90°.

In an example, the pressure sensitive adhesive is a radiation-cured UV-acrylic adhesive having a peel min of 2.0 N/25mm when measured according to standard FTM 2 90°, a peel max of 4.0 N/25mm when measured according to standard FTM 2 90°, a labelling temperature min of 10 °C, a service temperature min of 0 °C and a service temperature max of 120 °C.

### Materials of the release liner backing

In an example, the backing of the release liner is a white, transparent glassine backing paper having a substance of 60 g/m² when measured according to standard ISO 536, a caliper of 53 µm when measured according to standard ISO 534, a tensile strength in MD of 6.6 kN/m when measured according to standard ISO 1924, a tensile strength in CD of 2.5 kN/m when measured according to standard ISO 1924 and a transparency of 50 % when measured according to standard DIN 53147.

In an example, the backing of the release liner is a clear polyester backing material having a substance of 42 g/m² when measured according to standard ISO 536, a caliper of 30 µm when measured according to standard ISO 534, a tensile strength in MD of 6 kN/m when measured according to standard ASTM D882 and a tensile strength in CD of 6 kN/m when measured according to standard ASTM D882.

### Food certified materials

At least for edible consumables and also for cigarettes, it is preferable for the materials of the package to be food certified. Thus, also the materials of the label laminate web, the converted label web, the open-closure sealing label and the package comprising the open-closure sealing label may be food certified. Food certified materials may refer to materials that have been given by an accredited laboratory an approval for direct contact with dry and moist non-fatty foods. Food certified materials may refer to materials that are in compliance with at least one of the following EC regulations: EC 1935/2004, EC 2023/2006, EU 10/2011 or with the demands of the Code of Federal Regulations, Food and Drug Administration (FDA), 21 CFR Ch. I (April 1, 2012 edition) § 175.105 and § 175.125.

## Claims

1. A label laminate web (100) comprising a face stock (101, 201, 301), a pressure sensitive adhesive layer (102, 202, 302, 402) and a release liner (103, 203), the face stock (101, 201, 301) being adjoined to the release liner (103, 203) via the pressure sensitive adhesive layer (102, 202, 302, 402), wherein
- the pressure sensitive adhesive layer (102, 202, 302, 402) comprises an open-closure type removable pressure sensitive adhesive,
- a predetermined level of anchorage is arranged between the face stock (101, 201, 301) and the pressure sensitive adhesive layer (102, 202, 302, 402) for obtaining clean peel,
- the release liner (103, 203) comprises a release agent arranged to build a releasable contact with the pressure sensitive adhesive layer (102, 202, 302, 402),
- the label laminate web (100) comprises at least one label width, and
- the face stock (101, 201, 301) of the at least one label width comprises an adhesive area and at least one adhesion-free area (405) on longitudinal edge of the face stock (101, 201, 301) in machine direction of the label laminate web (100), accuracy of the width (406) and/or position of the adhesion-free area (405) in cross machine direction along longitudinal edge of the face stock (101, 201) being at least ± 1.0 mm.

2. The label laminate web (100) according to claim 1, wherein
- the label laminate web (100) is arranged to be delaminated and re-laminated during a conversion, and the release agent is arranged to rebuild a contact with the pressure sensitive adhesive layer (102, 202, 302, 402) after re-laminating of the label laminate web (100), and
- the pressure sensitive adhesive layer (102, 202, 302, 402) is configured to receive permanent adhesive (204, 304) after delaminating and before re-laminating of the label laminate web (100).

3. The label laminate web (100) according to any of the preceding claims, wherein the face stock (101, 201, 301) comprises polyester.

4. The label laminate web (100) according to any of the preceding claims, wherein the face stock (101, 201, 301) of the at least one label width comprises two adhesion-free areas (405) on longitudinal edges of the face stock (101, 201, 301) in machine direction of the laminate web (100), accuracy of the widths (406) and/or positions of the adhesion-free areas (405) in cross machine direction along longitudinal edges of the face stock (101, 201, 301) being at least ± 1.0 mm.

5. The label laminate web (100) according to claim 1, wherein the face stock (101, 201, 301) comprises polyethylene or polypropylene.

6. The label laminate web (100) according to any of the preceding claims, wherein the pressure sensitive adhesive layer (102, 202, 302, 402) has a peel adhesion value from 1.0 to 7.0 N/25 mm when measured according to standard FTM 2 90°.

7. The label laminate web (100) according to any of the preceding claims, wherein the release liner (103, 203) comprises paper or polyester as a backing material.

8. The label laminate web (100) according to any of the preceding claims, wherein a coat weight of the pressure sensitive adhesive layer (102, 202, 302, 402) is from 15 to 25 g/m².

9. The label laminate web (100) according to any of the preceding claims, wherein the pressure sensitive adhesive layer (102, 202, 302, 402) comprises UV-curable acrylic adhesive.

10. A converted label web (210a, 210b) comprising a release liner (103, 203) with labels attached onto it, wherein
- a label comprises a face (101, 201, 301) adjoined to the release liner (103, 203) via a pressure sensitive adhesive layer (102, 202, 302, 402),
- the pressure sensitive adhesive layer (102, 202, 302, 402) comprises an open-closure type removable pressure sensitive adhesive,
- a predetermined level of anchorage is arranged between the face (101, 201, 301) and the pressure sensitive adhesive layer (102, 202, 302, 402) for obtaining clean peel,
- the release liner (103, 203) comprises a release agent arranged to build a releasable contact with the pressure sensitive adhesive layer (102, 202, 302, 402),
- the converted label web (210a, 210b) comprises at least one label width,
- the face (101, 201, 301) of the at least one label width comprises an adhesive area and at least one adhesion-free area (405) on longitudinal edge of the face (101, 201, 301) in machine direction of the converted label web (210a, 210b), accuracy of the width (406) and/or position of the adhesion-free area (405) in cross machine direction along longitudinal edge of the face (101, 201, 301) being at least ± 1.0 mm.

11. The converted label web (210a, 210b) according to claim 10, further comprising permanent adhesive (204, 304) arranged in between the pressure sensitive adhesive layer (102, 202, 302, 402) and the release liner (103, 203).

12. An open-closure sealing label (320a, 320b, 420a, 420b, 520a, 520b) comprising a face (101, 201, 301) and a pressure sensitive adhesive layer (102, 202, 302, 402) adjoined to the face (101, 201, 301), wherein
- the pressure sensitive adhesive layer (102, 202, 302, 402) comprises an open-closure type removable pressure sensitive adhesive,
- a predetermined level of anchorage is arranged between the face (101, 201, 301) and the pressure sensitive adhesive layer (102, 202, 302, 402) for obtaining a clean peel,
the face (101, 201, 301) comprises an adhesive area and at least one adhesion-free area (405) along length of at least one edge of the open-closure sealing label, accuracy of the width (406) and/or position of the adhesion-free area (405) along length of at least one edge of the open-closure sealing label being at least ± 1.0 mm.

13. The open-closure sealing label (320b, 420b, 520b) according to claim 12, further comprising permanent adhesive (204, 304) arranged onto the pressure sensitive adhesive layer (102, 202, 302, 402).

14. The open-closure sealing label (320b, 420b, 520b) according to claim 12 or 13, wherein the face (101, 201, 301) comprises two adhesion-free areas (405) along lengths of opposite edges of the open-closure sealing label (320b, 420b, 520b).

15. A package (530a, 530b) comprising an open-closure sealing label (320a, 320b, 420a, 420b, 520a, 520b) according to any of the claims 12-14.

## Patentansprüche

1. Etikettenlaminatbahn (100) umfassend ein Obermaterial (101, 201, 301), eine Haftklebstoffschicht (102, 202, 302, 402) und eine Trennschicht (103, 203), wobei das Obermaterial (101, 201, 301) über die Haftklebstoffschicht (102, 202, 302, 402) an die Trennschicht (103, 203) angefügt ist, wobei
- die Haftklebstoffschicht (102, 202, 302, 402) einen in wiederverschließbarer Art lösbaren Haftklebstoff umfasst,
- ein vorgegebenes Haftungsniveau zwischen dem Obermaterial (101, 201, 301) und der Haftklebstoffschicht (102, 202, 302, 402) angeordnet ist, um ein sauberes Ablösen zu erzielen,
- die Trennschicht (103, 203) ein Trennmittel umfasst, das derart angeordnet ist, dass es einen trennbaren Kontakt mit der Haftklebstoffschicht (102, 202, 302, 402) aufbaut,
- die Etikettenlaminatbahn (100) mindestens eine Etikettenbreite umfasst und
- das Obermaterial (101, 201, 301) der mindestens einen Etikettenbreite einen Klebebereich und mindestens einen haftfreien Bereich (405) an einer Längskante des Obermaterials (101, 201, 301) in Maschinenrichtung der Etikettenlaminatbahn (100) umfasst, wobei die Genauigkeit der Breite (406) und/oder Position des haftfreien Bereichs (405) in Maschinenquerrichtung entlang der Längskante des Obermaterials (101, 201) mindestens ± 1,0 mm beträgt.

2. Etikettenlam inatbahn (100) nach Anspruch 1, wobei
- die Etikettenlaminatbahn (100) derart angeordnet ist, dass sie während einer Umwandlung delaminiert und relaminiert wird, und das Trennmittel derart angeordnet ist, dass es nach dem Relaminieren der Etikettenlaminatbahn (100) wieder einen Kontakt mit der Haftklebstoffschicht (102, 202, 302, 402) aufbaut, und
- die Haftklebstoffschicht (102, 202, 302, 402) dafür konfiguriert ist, nach dem Delaminieren und vor dem Relaminieren der Etikettenlaminatbahn (100) einen Permanentklebstoff (204, 304) aufzunehmen.

3. Etikettenlaminatbahn (100) nach irgendeinem der vorangehenden Ansprüche, wobei das Obermaterial (101, 201, 301) Polyester umfasst.

4. Etikettenlaminatbahn (100) nach irgendeinem der vorangehenden Ansprüche, wobei das Obermaterial (101, 201, 301) der mindestens einen Etikettenbreite zwei haftfreie Bereiche (405) an Längskanten des Obermaterials (101, 201, 301) in Maschinenrichtung der Laminatbahn (100) umfasst, wobei die Genauigkeit der Breiten (406) und/oder Positionen der haftfreien Bereiche (405) in Maschinenquerrichtung entlang Längskanten des Obermaterials (101, 201, 301) mindestens ± 1,0 mm beträgt.

5. Etikettenlaminatbahn (100) nach Anspruch 1, wobei das Obermaterial (101, 201, 301) Polyethylen oder Polypropylen umfasst.

6. Etikettenlaminatbahn (100) nach irgendeinem der vorangehenden Ansprüche, wobei die Haftklebstoffschicht (102, 202, 302, 402) bei Messung nach der Norm FTM 2 90° einen Klebkraftwert von 1,0 bis 7,0 N/25 mm aufweist.

7. Etikettenlaminatbahn (100) nach irgendeinem der vorangehenden Ansprüche, wobei die Trennschicht (103, 203) Papier oder Polyester als Trägermaterial umfasst.

8. Etikettenlaminatbahn (100) nach irgendeinem der vorangehenden Ansprüche, wobei ein Auftragsgewicht der Haftklebstoffschicht (102, 202, 302, 402) 15 bis 25 g/m² beträgt.

9. Etikettenlaminatbahn (100) nach irgendeinem der vorangehenden Ansprüche, wobei die Haftklebstoffschicht (102, 202, 302, 402) einen UVhärtenden Acrylklebstoff umfasst.

10. Umgewandelte Etikettenbahn (210a, 210b) umfassend eine Trennschicht (103, 203) mit darauf befestigten Etiketten, wobei
- ein Etikett eine Vorderseite (101, 201, 301) umfasst, die über eine Haftklebstoffschicht (102, 202, 302, 402) an die Trennschicht (103, 203) angefügt ist,
- die Haftklebstoffschicht (102, 202, 302, 402) einen in wiederverschließbarer Art lösbaren Haftklebstoff umfasst,
- ein vorgegebenes Haftungsniveau zwischen der Vorderseite (101, 201, 301) und der Haftklebstoffschicht (102, 202, 302, 402) angeordnet ist, um ein sauberes Ablösen zu erzielen,
- die Trennschicht (103, 203) ein Trennmittel umfasst, das derart angeordnet ist, dass es einen trennbaren Kontakt mit der Haftklebstoffschicht (102, 202, 302, 402) aufbaut,
- die umgewandelte Etikettenbahn (210a, 210b) mindestens eine Etikettenbreite umfasst,
- die Vorderseite (101, 201, 301) der mindestens einen Etikettenbreite einen Klebebereich und mindestens einen haftfreien Bereich (405) an einer Längskante der Vorderseite (101, 201, 301) in Maschinenrichtung der umgewandelten Etikettenbahn (210a, 210b) umfasst, wobei die Genauigkeit der Breite (406) und/oder Position des haftfreien Bereichs (405) in Maschinenquerrichtung entlang der Längskante der Vorderseite (101, 201, 301) mindestens ± 1,0 mm beträgt.

11. Umgewandelte Etikettenbahn (210a, 210b) nach Anspruch 10, ferner umfassend einen Permanentklebstoff (204, 304), der zwischen der Haftklebstoffschicht (102, 202, 302, 402) und der Trennschicht (103, 203) angeordnet ist.

12. Wiederverschließbares Verschlussetikett (320a, 320b, 420a, 420b, 520a, 520b) umfassend eine Vorderseite (101, 201, 301) und eine an die Vorderseite (101, 201, 301) angefügte Haftklebstoffschicht (102, 202, 302, 402), wobei
- die Haftklebstoffschicht (102, 202, 302, 402) einen in wiederverschließbarer Art lösbaren Haftklebstoff umfasst,
- ein vorgegebenes Haftungsniveau zwischen der Vorderseite (101, 201, 301) und der Haftklebstoffschicht (102, 202, 302, 402) angeordnet ist, um ein sauberes Ablösen zu erzielen,
die Vorderseite (101, 201, 301) einen Klebebereich und mindestens einen haftfreien Bereich (405) entlang der Länge mindestens einer Kante des wiederverschließbaren Verschlussetiketts umfasst, wobei die Genauigkeit der Breite (406) und/oder Position des haftfreien Bereichs (405) entlang der Länge mindestens einer Kante des wiederverschließbaren Verschlussetiketts mindestens ± 1,0 mm beträgt.

13. Wiederverschließbares Verschlussetikett (320b, 420b, 520b) nach Anspruch 12, ferner umfassend einen Permanentklebstoff (204, 304), der auf der Haftklebstoffschicht (102, 202, 302, 402) angeordnet ist.

14. Wiederverschließbares Verschlussetikett (320b, 420b, 520b) nach Anspruch 12 oder 13, wobei die Vorderseite (101, 201, 301) zwei haftfreie Bereiche (405) entlang Längen von einander gegenüberliegenden Kanten des wiederverschließbaren Verschlussetiketts (320b, 420b, 520b) umfasst.

15. Packung (530a, 530b) umfassend ein wiederverschließbares Verschlussetikett (320a, 320b, 420a, 420b, 520a, 520b) nach irgendeinem der Ansprüche 12-14.

## Revendications

1. Bande stratifiée d'étiquettes (100) comprenant une surface adhésive formant film à étiquettes (101, 201, 301), une couche adhésive sensible à la pression (102, 202, 302, 402) et un revêtement antiadhésif (103, 203), la surface adhésive formant film à étiquettes (101, 201, 301) étant accolée au revêtement antiadhésif (103, 203) via la couche adhésive sensible à la pression (102, 202, 302, 402), dans laquelle :
- la couche adhésive sensible à la pression (102, 202, 302, 402) comprend un adhésif sensible à la pression détachable du type à ouverture - fermeture ;
- un niveau prédéterminé d'ancrage est agencé entre la surface adhésive formant film à étiquettes (101, 201, 301) et la couche adhésive sensible à la pression (102, 202, 302, 402) pour obtenir un pelage propre ;
- le revêtement antiadhésif (103, 203) comprend un agent antiadhésif qui est agencé pour établir un contact libérable avec la couche adhésive sensible à la pression (102, 202, 302, 402) ;
- la bande stratifiée d'étiquettes (100) comprend au moins une largeur d'étiquette ; et
- la surface adhésive formant film à étiquettes (101, 201, 301) de l'au moins une largeur d'étiquette comprend une zone adhésive et au moins une zone exempte d'adhérence (405) sur un bord longitudinal de la surface adhésive formant film à étiquettes (101, 201, 301) dans une direction de machine de la bande stratifiée d'étiquettes (100), la précision de la largeur (406) et/ou de la position de la zone exempte d'adhérence (405) dans une direction de machine transversale suivant un bord longitudinal de la surface adhésive formant film à étiquettes (101, 201) étant d'au moins ± 1,0 mm.

2. Bande stratifiée d'étiquettes (100) selon la revendication 1, dans laquelle :
- la bande stratifiée d'étiquettes (100) est agencée pour être déstratifiée et restratifiée pendant une conversion, et l'agent antiadhésif est agencé pour rétablir un contact avec la couche adhésive sensible à la pression (102, 202, 302, 402) après restratification de la bande stratifiée d'étiquettes (100) ; et
- la couche adhésive sensible à la pression (102, 202, 302, 402) est configurée pour recevoir un adhésif permanent (204, 304) après la déstratification et avant la restratification de la bande stratifiée d'étiquettes (100).

3. Bande stratifiée d'étiquettes (100) selon l'une quelconque des revendications précédentes, dans laquelle la surface adhésive formant film à étiquettes (101, 201, 301) comprend un polyester.

4. Bande stratifiée d'étiquettes (100) selon l'une quelconque des revendications précédentes, dans laquelle la surface adhésive formant film à étiquettes (101, 201, 301) de l'au moins une largeur d'étiquette comprend deux zones exemptes d'adhérence (405) sur des bords longitudinaux de la surface adhésive formant film à étiquettes (101, 201, 301) dans une direction de machine de la bande stratifiée (100), la précision des largeurs (406) et/ou des positions des zones exemptes d'adhérence (405) dans une direction de machine transversale suivant des bords longitudinaux de la surface adhésive formant film à étiquettes (101, 201, 301) étant d'au moins ± 1,0 mm.

5. Bande stratifiée d'étiquettes (100) selon la revendication 1, dans laquelle la surface adhésive formant film à étiquettes (101, 201, 301) comprend du polyéthylène ou du polypropylène.

6. Bande stratifiée d'étiquettes (100) selon l'une quelconque des revendications précédentes, dans laquelle la couche adhésive sensible à la pression (102, 202, 302, 402) présente une valeur d'adhérence vis-à-vis du pelage comprise entre 1,0 et 7,0 N/25 mm telle que mesurée conformément au standard FTM 2 90°.

7. Bande stratifiée d'étiquettes (100) selon l'une quelconque des revendications précédentes, dans laquelle le revêtement antiadhésif (103, 203) comprend du papier ou du polyester en tant que matériau de support.

8. Bande stratifiée d'étiquettes (100) selon l'une quelconque des revendications précédentes, dans laquelle un poids de revêtement de la couche adhésive sensible à la pression (102, 202, 302, 402) est compris entre 15 et 25 g/m².

9. Bande stratifiée d'étiquettes (100) selon l'une quelconque des revendications précédentes, dans laquelle la couche adhésive sensible à la pression (102, 202, 302, 402) comprend un adhésif acrylique durcissable aux UV.

10. Bande d'étiquettes convertie (210a, 210b) comprenant un revêtement antiadhésif (103, 203) sur lequel sont fixées des étiquettes, dans laquelle :
- une étiquette comprend une surface (101, 201, 301) qui est accolée au revêtement antiadhésif (103, 203) via une couche adhésive sensible à la pression (102, 202, 302, 402) ;
- la couche adhésive sensible à la pression (102, 202, 302, 402) comprend un adhésif sensible à la pression détachable du type à ouverture - fermeture ;
- un niveau prédéterminé d'ancrage est agencé entre la surface (101, 201, 301) et la couche adhésive sensible à la pression (102, 202, 302, 402) pour obtenir un pelage propre ;
- le revêtement antiadhésif (103, 203) comprend un agent antiadhésif qui est agencé pour établir un contact libérable avec la couche adhésive sensible à la pression (102, 202, 302, 402) ;
- la bande d'étiquettes convertie (210a, 210b) comprend au moins une largeur d'étiquette ;
- la surface (101, 201, 301) de l'au moins une largeur d'étiquette comprend une zone adhésive et au moins une zone exempte d'adhérence (405) sur un bord longitudinal de la surface (101, 201, 301) dans une direction de machine de la bande d'étiquettes convertie (210a, 210b), la précision de la largeur (406) et/ou de la position de la zone exempte d'adhérence (405) dans une direction de machine transversale suivant un bord longitudinal de la surface (101, 201, 301) étant d'au moins ± 1,0 mm.

11. Bande d'étiquettes convertie (210a, 210b) selon la revendication 10, comprenant en outre un adhésif permanent (204, 304) qui est agencé entre la couche adhésive sensible à la pression (102, 202, 302, 402) et le revêtement antiadhésif (103, 203).

12. Étiquette de scellement à ouverture - fermeture (320a, 320b, 420a, 420b, 520a, 520b) comprenant une surface (101, 201, 301) et une couche adhésive sensible à la pression (102, 202, 302, 402) qui est accolée à la surface (101, 201, 301), dans laquelle :
- la couche adhésive sensible à la pression (102, 202, 302, 402) comprend un adhésif sensible à la pression détachable du type à ouverture - fermeture ;
- un niveau prédéterminé d'ancrage est agencé entre la surface (101, 201, 301) et la couche adhésive sensible à la pression (102, 202, 302, 402) pour obtenir un pelage propre ;
la surface (101, 201, 301) comprend une zone adhésive et au moins une zone exempte d'adhérence (405) suivant la longueur d'au moins un bord de l'étiquette de scellement à ouverture - fermeture, la précision de la largeur (406) et/ou de la position de la zone exempte d'adhérence (405) suivant la longueur d'au moins un bord de l'étiquette de scellement à ouverture - fermeture étant d'au moins ± 1,0 mm.

13. Étiquette de scellement à ouverture - fermeture (320b, 420b, 520b) selon la revendication 12, comprenant en outre un adhésif permanent (204, 304) qui est agencé sur la couche adhésive sensible à la pression (102, 202, 302, 402).

14. Étiquette de scellement à ouverture - fermeture (320b, 420b, 520b) selon la revendication 12 ou 13, dans laquelle la surface (101, 201, 301) comprend deux zones exemptes d'adhérence (405) suivant des longueurs de bords opposés de l'étiquette de scellement à ouverture - fermeture (320b, 420b, 520b).

15. Emballage (530a, 530b) comprenant une étiquette de scellement à ouverture - fermeture (320a, 320b, 420a, 420b, 520a, 520b) selon l'une quelconque des revendications 12 à 14.
